# EUROPEAN PATENT SPECIFICATION

(11) **EP 0 880 324 B1**
(45) Date of publication and mention of the grant of the patent: **07.11.2001**
(21) Application number: 97901228.3
(22) Date of filing: 11.02.1997
(51) Int. Cl.: A23L 1/03, A23K 1/165, C05F 11/08

(54) **PRODUCT FOR FOOD FOR THE SOIL, PLANTS, ANIMALS, AND HUMANS**
NAEHRSTOFFE FUER DEN BODEN, PFLANZEN, TIERE UND MENSCHEN
PRODUIT POUR ALIMENTS DESTINES AU SOL, AUX PLANTES, AUX ANIMAUX ET AUX ETRES HUMAINS

(30) Priority: 12.02.1996 CH 34996
(43) Date of publication of application: 02.12.1998
(73) Proprietor: Mena, Annalisa, 6911 Campione d'Italia (IT)
(72) Inventor: GIUFFRE ISLER, Laura, CH-1003 Lausanne (CH)
(74) Representative: Fiammenghi-Domenighetti, Delfina
(86) International application number: IB9700105
(87) International publication number: WO9728699

(56) References cited:
- DE-A- 1 792 630
- GB-A- 1 151 236
- DATABASE WPI Section Ch, Derwent Publications Ltd., London, GB; Class D13, AN 72-34152T XP002031257 & JP 47 017 828 B (KIKKOMAN SHOYU CO LTD)
- DATABASE WPI Section Ch, Week 7415 Derwent Publications Ltd., London, GB; Class D11, AN 74-28167V XP002031258 & JP 49 011 427 B (NISSHIN FLOUR MILLING CO) , 16 March 1974

## Description

This invention relates to a product that is intended to round out powdered foods humans.

The object of this invention is also a biochemical procedure by means of which said product can be obtained, in the various forms that are called for and are most convenient in the various cases of food or rounding out of food.

It is well known that every species or group of species has microflora of specific composition in its rhizosphere, whereby said microflora may undergo mutations at the same time as the plant develops. In addition, around the roots are zones with microflora that are qualitatively and quantitatively diverse, but the more specific flora is that which develops on the surfaces of the roots. In the layer about 0.5 mm thick that is right around the roots, there develops a microflora which is rather diverse in composition. Finally, in the layer about 2-5 mm thick is a diverse and less abundant rhizospheric flora. The rhizosphere plays a very important role in the processes that take place in the soil and in the development of the plants. In this area the nutrient substances of the soil undergo more or less major changes. In addition, many microorganisms of the rhizosphere have a direct effect on the nutrition and development of the plants. These microorganisms include nodular bacteria, non-parasitic nitrogen-fixing microorganisms (Azotobacter and Clostridium), and a certain number of other bacteria that secrete biotic substances. In particular, the vitamin content is much higher in the rhizosphere than in the rest of the soil.

Some bacteria produce growth factors such as auxins, which accelerate the development of the plant. Consequently, the microorganisms of the rhizosphere that produce these substances exert a stimulating action on plant development. At the same time, the rhizosphere contains numerous antagonistic bacteria and antibiotic-producing bacteria, particularly mycolytic bacteria, that destroy the mycelia of fungi and thus protect the plant against fungal diseases. The specific microorganisms develop not only on the surfaces, but also in the roots of the plants and particularly in the root hairs.

Similarly, the applicant has found that for each species of plant and animal, including the human species, there is a specific microorganism which can be cultivated by the conjunctival tissue and which lives in symbiosis with its host, for which it procures the elements that are necessary for assimilating food, in order to transform the latter into new cells that have the same specific nature as the host.

We can mention, for example, that E. coli is the "symbiont" of man, B. subtilis is that of the pig, Cladosporum herbarum is that of barley. The elements that are necessary for assimilating food can be obtained in vitro and can be used for the industrial fabrication of specific products for every species of animal, including humans, to be employed as a food supplement.

These vital elements are absolutely necessary for the transamination in vivo of proteins and would also condition the synthesis, distribution, and use in vivo of vitamins, hormones, and enzymes, as well as viruses, which are nothing more than nucleoproteins.

This would therefore involve Unknown Growth and Assimilation Factors, which in recent years have been sought by specialists in human and animal nutrition.

In addition, the transformation of microbic cultures into mycelic cultures, when accomplished by appropriate means, makes it possible to obtain the specific mold that corresponds to each symbiont. By way of indication, it is known that the cultivation of the symbiont of man (E. coli) gives rise to a penicillin that can come in different genetic forms.

From the cultivation of this mold, it is possible to extract the element of life that is particular to each species of plant and animal; this element is the one that has given rise to said mold, which is also characteristic of each species.

These therefore include specific "biozymes," and the "yeast" form would be nothing more than an intermediate stage between the symbiont of a given species and its specific mold.

The applicant has also noted that, in order for these specific "biozymes" to be able to exert their effect, it is necessary that they operate in "ground" that is endowed with perfectly balanced mineral nutrition. This mineral nutrition leads to the plastic formation of the plant, animal, and human cells (a function of the anions) and controls the colloidal dispersion of the elements that protect the cytoplasm, i.e., the more or less liquid substance that surrounds the cell nucleus (the role of the cations), regardless of the catalytic action of all these elements and of the function of the cations in transporting and utilizing anionic elements, as well as the use and synthesis, as done by the living organisms of the soil microfauna and microflora, of amino acids, hormones, vitamins, and enzymes.

The phenomena of assimilation and disassimilation are the result of a state of isoelectric equilibrium between the intracellular medium and the environment, particularly between the cellular medium and the soil (which can be considered an effective colloidal "gel") for plants, and between the intracellular medium and the "humoral" ground in the case of animals and man.

Any irregularity or phenomenon of shortage of the soil and the humoral ground is invariably reflected in the living conditions of the plants, animals, and humans, and consequently the isoelectric conditions (measured as "pH" values) constitute an essential factor for the establishment and preservation of the states of equilibrium that are required in order for life phenomena to deploy and develop normally.

For example, the intracellular pH of plants will be very close to the isoelectric value of the soil. This observation explains, for example, why potatoes cannot be grown in alkaline soil or in soil with high pH for more than one or two years without developing such manifestations of degeneration as to cause the plant to disappear.

Under natural conditions of plant life, the disappearance or loss of balance in the soil of certain mineral elements, and particularly the calcium-magnesian alkaline-earth elements, causes certain plant species to disappear and other species to appear that are better suited to the new environment, i.e., to the modified conditions of isoelectric equilibrium.

Under artificial conditions of plant life, owing to the use of methods of intensive cultivation based on incomplete mineral fertilizers, there are inevitably manifestations of degeneration in the cultivated plants (wheat, rice, barley, maize, beets and grapes) and sensitization to sporophytic diseases or diseases of other etiology.

In human and animal feeding, the consumption of plants that suffer from conditions of shortage or of animal foods that exhibit corresponding conditions, which result primarily from a mineral imbalance in the soil, gives rise to a rapid change in living conditions and leads to signs of disruption of nutrition and, consequently, of morbid states owing to the shortage or excess of certain substances (e.g., potassium or nitrogen).

Studies that have been done on the elements of the humoral ground of man and animals (blood serum, saliva, urine) have made it possible to discern a balance in the acid/base ratio which, as in the case of an imbalance in the calcium-potassium/potassium-sodium ratio in plants, represents a factor that produces a marked sensitivity to bacterial and viral diseases.

It has also been noted that bacteria and viruses (which are nucleoproteins at the edges of the living world) require for their development special environmental conditions. The applicant has found that, in general, an alkaline medium, i.e., a medium of elevated pH, favors their development and that an imbalance in the monovalent and bivalent ions of alkaline and alkaline-earth metals constitutes the most favorable condition for the development of pathogenic microorganisms and viruses.

Thus, in the majority of the cases, the mineral imbalance of human nutrition is due to the use of only the elements nitrogen, phosphorus, and potassium, without the necessary correctives and supplements that round out the ratios between the atomic weights.

In addition, the applicant has found that amino acids (proteins) and, consequently, the component elements of viruses (nucleoprotein complexes) exhibit the nature of ampholytes and thus have an acidic or basic function depending on the reaction of the environment. The intracellular pH will thus be very close to the isoelectric point, which is specific for each ampholyte. This point therefore is the critical phase in which the ampholyte will have a minimum solubility level and maximum instability.

This critical point constitutes the factor which determines the nature of reversibility and irreversibility of a reaction. If the humoral characteristic comes to this point modified by a favorable pH modification, modifications are obtained in intracellular life, in the presence of certain enzymes, natural vitamins, hormones, and antibiotics, and the synthesis or disaggregation in vivo of nucleoprotein complexes is favored, hampering or promoting the development of certain enzymes and bacteria both in the soil and in plants, in animals and man.

All of this depends on the regulatory action exerted by the acid (DNA).

The specific object of this invention, which constitutes a practical application of the above-indicated observations by the applicant, is the implementation of a procedure for producing powdered food for humans as described in the preamble of appended claim 1, characterized by the characterizing part of Claim 1.

The products made using this procedure are also part of the object of this invention.

None of the documents of the prior art, such as for example Patent DE-A-1792630, describes a biochemical procedure similar to that of the present invention as regards both the elements that are used and the favourable results achieved.

In general, the products that are the object of this invention are essentially composed of a mixture of anionic elements (such as nitrogen, sulfur and phosphorus) in colloidal or pseudo-colloidal form, and of cationic elements (potassium, sodium, calcium, copper, zinc and magnesium) also in colloidal or pseudo-colloidal form; this mixture is able to round out the values of the atomic weights of the elements in question so as to bring the environment into a state of equilibrium.

In particular, said anionic and cationic elements are present in the mixture in the form of pure metals in the colloidal state, and consequently this product manifests itself in turn as a colloidal or pseudo-colloidal solution and, in this primary form, can be used to feed humans.

It should be noted that the most suitable mixtures are those which, before the hydrolysis of the substances used, titrate no more than 15% carbohydrates.

The procedures used for cultivation are the current procedures, for both cultivation down in the soil and on the surface, but always in closed and aseptic receptacles, and the procedure of the invention is as follows: the starting material is a symbiont element that is cultivated from a culture broth such as bacteria or mold, from which element is extracted a product with enzymatic powers with which are autolyzed the raw materials that will serve both as foods and as rounding-out elements for foods; whereby to the whole can be added ions or colloidal or pseudocolloidal particles in nearly inverse proportions with regard to the respective atomic weights in order to re-establish biochemical equilibrium and according to the purpose for which the food is intended.

As food for humans, the product can be fixed to dried yeasts of beer, wood, bread and whey.

For food for humans, the product can be fixed as well to dried organic extracts that are obtained from various animals.

Particularly for food for humans, the product can be fixed to autolysates of yeast, milk casein, various creams, particularly soy; or proteolysates of animal blood, whereby the product comes in the form of a liquid or a paste.

The procedure for fabricating the product that is the object of the invention can be developed in various ways, depending on whether the intention is to obtain the product in the form of a solution or in dry form, or as an irradiated product. In special cases colloidal solutions can be prepared by electrochemical or chemical means, particularly for products that are intended as food for animals or humans.

In the case where production is done by chemical means, it is possible to take advantage of the action of weak organic acids (glutamic acid and nucleic acid).

To obtain products in the dry state, the starting product is mixed with one of the above-mentioned substrates, and the mixture is then dried in a vacuum or in a furnace, at a temperature of 60°C, and then pulverized.

In the case where the substrate consists of yeasts, which are rich in sterols, it can be subjected to ultraviolet irradiation after undergoing drying and pulverization, so as to ensure the production of vitamin D2.

Clearly, other approaches can also be adopted, and thus also the specific characteristics of the products obtained, taken separately or together with the various support measures indicated above, may be modified in various ways depending on the different approaches that are convenient and/or required in production, application, and use, all without exceeding the scope of this invention.

Below, using simplified examples; is presented the standard composition of a powdered food for humans that contains:
78-82 parts per hundred by weight of autolysate of wheat perisperm and wheat germ;
9-11 parts per hundred by weight of sodium salt of deoxyribonucleic acid;
9-11 parts per hundred by weight of methionine with the addition of excipients.

The standard composition of the same food that is made in the form of compresses is the following:
about 45 parts per hundred by weight of autolysate of wheat perisperm and wheat germ;
about 5 parts per hundred by weight of sodium salt of deoxyribonucleic acid;
about 5 parts per hundred by weight of methionine; with the addition of:
about 2 parts per hundred by weight of magnesium stearate;
about 43 parts per hundred by weight of lactose.

Finally, the standard composition of the same food that is also to be made in the form of dragees is the following:
about 28 parts per hundred by weight of autolysate of wheat perisperm and wheat germ;
about 3.1 parts per hundred by weight of sodium salt of deoxyribonucleic acid;
about 3.1 parts per hundred by weight of methionine; with the addition of:
about 6.2 parts per hundred by weight of corn amide;
about 1.2 parts per hundred by weight of magnesium carbonate;
about 1.2 parts per hundred by weight of gum arabic;
about 0.05 part per hundred by weight of coloring E 110;
about 57.15 parts per hundred by weight of sugar.

The inventor suggests using a deoxyribonucleic acid such as a native extract of plant or animal substances or microorganisms belonging to the following group:
- yeasts or molds;
- salmon sperm;
- extract of the phage of the colibacillus;
- extract from the lysate of bacteria of the family of colibacilli and enterococci such as:
   a) human eubiotic bacterial flora;
   b) Escherichia coli;
   c) bacillus acidophillus;
   d) bacillus bifidus.

To further improve the organoleptic qualities of a food according to the invention, the inventor also calls for adding to it an amount of between 10% and 50% of the weight of the food itself of pure lyophilized biological wheat grass juice or lyophilized blue-green algae of the species Alphanizamenon Flos-Aquae.

## Claims

1. Biochemical procedure for preparing powdered food for humans, whereby:
the starting material is a cultivated symbiont element or a culture broth such as bacteria or mold, from which element is extracted a product with enzymatic powers with which are autolysated the raw materials which will serve either as foods or as rounding-out elements for foods, whereby to the whole can be added ions or colloidal or pseudocolloidal particles in nearly inverse proportions with regard to the respective atomic weights in order to re-establish biochemical equilibrium and according to the purpose for which the food is intended, whereby said symbiont element that is cultivated in a culture broth is the characteristic symbiont of wheat perisperm and wheat germ, and the latter two are subjected to autolytic fermentation in a filtrate of said culture broth and the product resulting from said autolytic fermentation is then mixed with a sodium salt of deoxyribonucleic acid and with methionine and is finally dried at 60°C and pulverized, **characterized by** that the said deoxyribonucleic acid is of the native type and is extracted from plant or animal substances or microorganisms belonging to the following group:
- yeasts or molds;
- salmon sperm;
- extract of the phage of the colibacillus;
- extract from the lysate of bacteria of the family of colibacilli and enterococci such as:
a) human eubiotic bacterial flora;
b) Escherichia coli;
c) bacillus acidophillus;
d) bacillus bifidus.

2. Powdered food for humans, extracted according to the procedure of claim 1, **characterized by** the fact that it contains:
78-82 parts per hundred by weight of autolysate of wheat perisperm and wheat germ;
9-11 parts per hundred by weight of sodium salt of deoxyribonucleic acid;
9-11 parts per hundred by weight of methionine with the addition of excipients.

3. Powdered food according to claim 2, produced in the form of compresses and composed of:
about 45 parts per hundred by weight of autolysate of wheat perisperm and wheat germ;
about 5 parts per hundred by weight of sodium salt of deoxyribonucleic acid;
about 5 parts per hundred by weight of methionine;
with the addition of:
about 2 parts per hundred by weight of magnesium stearate;
about 43 parts per hundred by weight of lactose.

4. Powdered food according to claim 3, produced in the form of dragees and composed of:
about 28 parts per hundred by weight of autolysate of wheat perisperm and wheat germ;
about 3.1 parts per hundred by weight of sodium sald of deoxyribonucleic acid;
about 3.1 parts per hundred by weight of methionine;
with the addition of:
about 6.2 parts per hundred by weight of corn amide;
about 1.2 parts per hundred by weight of magnesium carbonate;
about 1.2 parts per hundred by weight of gum arabic;
about 0.05 part per hundred by weight of coloring E 110;
about 57.15 parts per hundred by weight of sugar.

5. Powdered food according to one of the preceding claims to which is added a quantity of between 10% and 50% of weight of the food itself of pure lyophilized biological wheat grass juice.

6. Powdered food according to one of the preceding claims to which is added a quantity of between 10% and 50% of the weight of the food itself of lyophilized blue-green algae of the species Alphanizamenon Flos-Aquae.

7. Nutritional rounding-out substance for preparing powdered food for humans, **characterized by** animal and/or plant tissues that are reduced by autolysis with the aid of enzymatic liquors that are obtained by the procedure according to one of the preceding claim, with the addition of ions or colloidal or pseudocolloidal particles in nearly inverse proportions with regard to the respective atomic weights, depending on the substrates to which said substance is added.

## Patentansprüche

1. Biochemisches Verfahren zur Herstellung eines pulverförmigen Lebensmittels für Menschen, bei dem das Ausgangsmaterial ein kultiviertes, symbiotisches Element oder ein Nährboden oder eine Nährlösung ist, wie Bakterien oder Pilze, wobei aus dem Element ein Produkt mit enzymatischen Kräften isoliert wird, mit dem die Rohmaterialien autolysiert werden, wobei das Produkt davon entweder als Lebensmittel oder zur Ergänzung von Lebensmitteln dient, wobei dem Ganzen Ionen oder kolloidale oder pseudo-kolloidale Partikel in nahezu inversen Anteilen in bezug auf die jeweiligen Atomgewichte zugesetzt werden können, um ein biochemisches Gleichgewicht wiederherzustellen und gemäß dem für das Lebensmittel gedachten Zweck, wobei das symbiotische Element, das in der Nährlösung kultiviert wird, der charakteristische Symbiont von Weizenperisperm und Weizenkeim ist und die letztgenannten beiden einer autolytischen Fermentation in einem Filtrat der Nährlösung unterworfen werden und das aus der autolytischen Fermentation resultierende Produkt dann mit einem Natriumsalz der Deoxyribonucleinsäure und mit Methionin gemischt und schließlich bei 60 °C getrocknet und pulverisiert wird, **dadurch gekennzeichnet, dass** die Deoxyribonucleinsäure von natürlich vorkommender Art und aus pflanzlichen oder tierischen Substanzen extrahiert ist oder aus Mikroorganismen, die zu der folgenden Gruppe gehören:
- Hefe oder Pilze;
- Salmonellen;
- Extrakt von Coli-Phagen;
- Extrakt aus dem Lysat von Bakterien der Familien der Colibakterien und der Enterokokken, wie:
a) menschliche, eubiotische Bakterienflora;
b) Escherichia coli;
c) Bazillus acidophillus;
d) Bazillus bifidus.

2. Pulverförmiges Lebensmittel für Menschen, extrahiert nach dem Verfahren gemäß Anspruch 1, **gekennzeichnet durch** die Tatsache, dass es enthält:
78 bis 82 Gewichtsteile pro hundert des Autolysats von Weizenperisperm und Weizenkeim;
9 bis 11 Gewichtsteile pro hundert des Natriumsalzes der Deoxyribonucleinsäure;
9 bis 11 Gewichtsteile pro hundert an Methionin unter Zugabe von Arzneimittelträgern.

3. Pulverförmiges Lebensmittel gemäß Anspruch 2, hergestellt in der Form von Kompretten und zusammengesetzt aus:
ungefähr 45 Gewichtsteile pro hundert Autolysat von Weizenperisperm und Weizenkeim;
ungefähr 5 Gewichtsteile pro hundert Natriumsalz von Deoxyribonucleinsäure;
ungefähr 5 Gewichtsteile pro hundert Methionin;
unter Zugabe von:
ungefähr 2 Gewichtsteile pro hundert Magnesiumstearat;
ungefähr 43 Gewichtsteile pro hundert Lactose.

4. Pulverförmiges Lebensmittel gemäß Anspruch 3, hergestellt in der Form von Dragees und zusammengesetzt aus:
ungefähr 28 Gewichtsteile pro hundert Autolysat von Weizenperisperm und Weizenkeim;
ungefähr 3,1 Gewichtsteile pro hundert Natriumsalz von Deoxyribonucleinsäure;
ungefähr 3,1 Gewichtsteile pro hundert Methionin;
unter Zugabe von:
ungefähr 6,2 Gewichtsteile pro hundert Maisamid;
ungefähr 1,2 Gewichtsteile pro hundert Magnesiumcarbonat;
ungefähr 1,2 Gewichtsteile pro hundert Gummi arabicum;
ungefähr 0,05 Gewichtsteile Farbstoff E 110;
ungefähr 57,15 Gewichtsteile pro hundert Zucker.

5. Pulverförmiges Lebensmittelprodukt gemäß einem der vorhergehenden Ansprüche, dem eine Menge zwischen 10 und 50 Gew.-% des Lebensmittels selbst an reinem, lyophilisiertem, biologischem Weizengrasssaft zugegeben wird.

6. Pulverförmiges Lebensmittelprodukt gemäß einem der vorhergehenden Ansprüche, dem einem Menge zwischen 10 und 50 Gew.-% des Lebensmittels selbst an lyophilisierten Blau-grün-Algen der Spezies Alphanizamenon Flos-Aquae zugesetzt wird.

7. Nahrungsergänzungssubstanz zur Herstellung eines pulverförmigen Lebensmittels für Menschen, **gekennzeichnet durch** tierische und/oder pflanzliche Gewebe, die mit Hilfe von enzymatischen Flüssigkeiten reduziert werden, die **durch** ein Verfahren gemäß einem der vorhergehenden Ansprüche unter Zugabe von Ionen oder kolloidalen oder pseudokolloidalen Partikeln in annähernd umgekehrten Verhältnis in bezug auf das jeweilige Atomgewicht in Abhängigkeit von den Substraten, zu denen die Substanz gegeben wird, erhalten wurden.

## Revendications

1. Procédure biochimique pour la préparation d'aliments en poudre pour humains, où: le matériau de départ est un élément symbiont en culture ou un bouillon de culture comme des bactéries ou de la moisissure, tandis que l'on extrait de cet élément un produit aux pouvoirs enzymatiques permettant d'autolyser les matières premières qui serviront d'aliments ou d'éléments de finition pour aliments, alors que l'on peut ajouter à l'ensemble des ions ou des particules colloïdales ou pseudocolloïdales dans des proportions pratiquement inverses par rapport aux poids atomiques respectifs afin de rétablir l'équilibre biochimique et selon l'application recherchée pour l'aliment, tandis que ledit élément symbiont mis dans un bouillon de culture est le symbiont caractéristique de périsperme de froment et de germe de froment, et ces deux derniers sont soumis à une fermentation autolytique dans un produit filtré dudit bouillon de culture, puis le produit résultant de ladite fermentation autolytique est mélangé avec un sel de sodium d'acide désoxyribonucléique et avec de la méthionine, avant d'être séché à 60°C et pulvérisé, **caractérisé en ce que** ledit acide désoxyribonucléique est de type natif et extrait de plante ou de substances animales ou encore de micro-organismes appartenant au groupe suivant :
- levures ou moisissures ;
- sperme de saumon ;
- extrait du phage du colibacille ;
- extrait du lysate des bactéries de la famille des colibacilles et des entérocoques, à savoir :
a) flore bactérienne eubiotique humaine ;
b) Escherichia coli ;
c) bacillus acidophillus ;
d) bacillus bifidus.

2. Aliment en poudre pour humains, extrait selon la procédure de la revendication 1, **caractérisé par le fait qu'**il contient :
78-82 parties pour cent en poids de produit autolysé de périsperme de froment et de germe de froment ;
9-11 parties pour cent en poids de sel de sodium d'acide désoxyribonucléique ;
9-11 parties pour cent en poids de méthionine avec l'addition d'excipients.

3. Aliment en poudre selon la revendication 2, produit sous forme de compresses et composé de :
environ 45 parties pour cent en poids de produit autolysé de périsperme de froment et de germe de froment ;
environ 5 parties pour cent en poids de sel de sodium d'acide désoxyribonucléique ;
environ 5 parties pour cent en poids de méthionine ;
avec l'addition des éléments suivants :
environ 2 parties pour cent en poids de stéarate de magnésium ;
environ 43 parties pour cent en poids de lactose.

4. Aliment en poudre selon la revendication 3, produit sous forme de dragées et composé de :
environ 28 parties pour cent en poids de produit autolysé de périsperme de froment et de germe de froment ;
environ 3,1 parties pour cent en poids de sel de sodium d'acide désoxyribonucléique ;
environ 3,1 parties pour cent en poids de méthionine ;
avec l'addition des éléments suivants :
environ 6,2 parties pour cent en poids d'amide de blé ;
environ 1,2 partie pour cent en poids de carbonate de magnésium ;
environ 1,2 partie pour cent en poids de gomme arabique ;
environ 0,05 partie pour cent en poids de colorant E 110 ;
environ 57,15 parties pour cent en poids de sucre.

5. Aliment en poudre selon l'une des revendications précédentes auquel on ajoute une quantité comprise entre 10% et 50% en poids de l'aliment proprement dit de jus d'herbe de froment biologique lyophilisé pur.

6. Aliment en poudre selon l'une des revendications précédentes auquel on ajoute une quantité comprise entre 10% et 50% du poids de l'aliment proprement dit des algues lyophilisées de couleur bleu-vert de l'espèce Alphanizamenon Flos-Aquae.

7. Substance de finition nutritive pour la préparation d'aliment en poudre pour humains, **caractérisé par** des tissus animaux et/ou végétaux réduits par autolyse à l'aide de liqueurs enzymatiques obtenues par la procédure selon l'une des revendications précédentes, avec l'addition d'ions ou de particules colloïdales ou pseudocolloïdales dans des proportions pratiquement inverses par rapport aux poids atomiques respectifs, selon les substances auxquelles on ajoute ledit produit.
